# EUROPÄISCHE PATENTSCHRIFT

(11) **EP 1 012 224 B1**
(45) Veröffentlichungstag und Bekanntmachung des Hinweises auf die Patenterteilung: **22.10.2003**
(21) Anmeldenummer: 99961976.0
(22) Anmeldetag: 02.07.1999
(51) Int. Cl.: C12C 7/17

(54) **VORRICHTUNG ZUR MAISCHEZUFÜHRUNG**
DEVICE FOR FEEDING MASH
DISPOSITIF D'ALIMENTATION EN MOUT

(30) Priorität: 16.07.1998 DE 19831870
(43) Veröffentlichungstag der Anmeldung: 28.06.2000
(73) Patentinhaber: Hrch. Huppmann GmbH, 97318 Kitzingen (DE)
(72) Erfinder: HERRMANN, Hans, D-97334 Sommerach (DE); ASBECK, Franz, D-97357 Prichsenstadt (DE); LENZ, August, jun., D-97318 Kitzingen (DE)
(74) Vertreter: Böck, Bernhard, Dipl.-Ing.
(86) Internationale Anmeldenummer: DE9902108
(87) Internationale Veröffentlichungsnummer: WO00004130

(56) Entgegenhaltungen:
- EP-A- 0 419 442
- EP-A- 0 774 509
- DE-B- 1 073 987
- DE-C- 19 602 167

## Beschreibung

Die Erfindung betrifft eine Vorrichtung zur Maischezuführung in einen Läuterbottich nach dem Oberbegriff des Patentanspruchs 1.

Das Einlagern der Maische in den Läuterbottich ist die Vorbedingung für ein anschließendes Abläutern der Würze. Dazu wird die Maische aus einem Maischebehälter mittels einer Maischepumpe abgepumpt und über ein Rohrsystem, das an Zuführöffnungen des Läuterbottichs angeschlossen ist, in den Läuterbottich eingepumpt. Um die Maische möglichst gleichmäßig im Läuterbottich zu verteilen und dadurch eine gleichmäßige Filterschicht zu erreichen, weisen die bekannten Anlagen mehrere Zuführöffnungen im Läuterbottich auf, so daß die Maische an mehreren Stellen gleichzeitig in den Läuterbottich einströmen kann. An jede der Zuführöffnungen ist ein Teilstromrohr angeschlossen, das mit einem Hauptrohr verbunden ist, so daß beim Betrieb der Maischepumpe Maische aus dem Maischebehälter über das Hauptrohr und die Teilstromrohre in den Läuterbottich zugeführt werden kann.

Nachteilig an den bekannten Vorrichtungen zur Maischezuführung ist es, daß die Teilstromrohre an unterschiedlichen Stellen an das Hauptrohr angeschlossen sind. Da sich der Gesamtdruck der Flüssigkeit im Hauptrohr infolge der an den einzelnen Teilstromrohren abgeführten Volumenströme mit zunehmenden Abstand zur Maischepumpe verringert, strömt die Maische an den verschiedenen Teilstromrohren nicht mit dem jeweils gleichen Anfangsdruck ein.

Im Ergebnis bewirken die unterschiedlichen Druckverhältnisse in den verschiedenen Teilstromrohren eine ungleichmäßige Ausströmung der Maische an den verschiedenen Zuführöffnungen des Läuterbottichs. Durch die ungleichmäßige Zuführung von Maische an den verschiedenen Zuführöffnungen bildet sich während des Abmaischens eine ungleichmäßige Filterschicht am Boden des Läuterbottichs aus, die das Ergebnis des Abläuterns negativ beeinflußt.

Aufgabe der vorliegenden Erfindung ist es, eine gattungsgemäße Vorrichtung zur Maischezuführung zu liefern, durch die eine gleichmäßigere Filterschicht beim Abmaischen ausgebildet wird. Diese Aufgabe wird durch eine Vorrichtung nach der Lehre des Patentanspruchs 1 gelöst.

Bevorzugte Ausführungsformen der Erfindung sind Gegenstand der Unteransprüche.

Erfindungsgemäß ist zwischen dem Hauptrohr und den Teilstromrohren ein Puffergefäß angeordnet. Die Maische strömt aus dem Hauptrohr in das Puffergefäß, an das alle Teilstromrohre angeschlossen sind. Im Ergebnis bildet sich nach dem Abklingen von Einschwingprozessen zu Beginn des Abmaischens in dem Puffergefäß ein gleichmäßiger Gesamtdruck aus, so daß die Maische in alle Teilstromrohre mit dem gleichen Anfangsdruck einströmt. Dadurch stimmen die Druckverhältnisse an den Einströmöffnungen aller Teilstromrohre, das heißt am Übergang vom Puffergefäß zu den einzelnen Teilstromrohren, miteinander überein, so daß eine gleichmäßige Filterschicht ausgebildet wird.

Die gleichmäßige Ausbildung der Filterschicht wird noch verbessert, wenn außerdem aller Teilstromrohre den gleichen Leitungswiderstand aufweisen, da dadurch auch die Druckverhältnisse an allen Zuführöffnungen des Läuterbottichs im wesentlichen miteinander übereinstimmen, so daß die Maische unter im wesentlichen gleichen Bedingungen durch alle Zuführöffnungen in den Läuterbottich einströmt.

Der Leitungswiderstand der Teilstromrohre wird im wesentlichen von deren Rohrdurchmesser und der Rohrlänge bestimmt. Deshalb sollten die Teilstromrohre vorzugsweise im wesentlichen den gleichen Rohrduchmesser und die gleiche Rohrlänge aufweisen, so daß sich der gleiche Leitungswiderstand ergibt. Dies läßt sich beispielsweise besonders einfach dadurch erreichen, daß alle Teilstromrohre im wesentlichen baugleich gefertigt werden.

Die Zuführöffnungen können grundsätzlich an beliebigen Stellen des Läuterbottichs angeordnet sein. Um die Entmischung der Maische mit ihren nachteiligen Folgen während des Abmaischens zu vermeiden, ist es vorteilhaft, die Zuführöffnungen in an sich bekannter Art an der Unterseite des Läuterbottichs anzuordnen.

Eine relativ gleichmäßige Verteilung der Maische bei zugleich relativ geringem Fertigungsaufwand wird erreicht, wenn der Läuterbottich zumindest zwei Zuführöffnungen für die Maischezufuhr aufweist, die alle auf einer gedachten Kreislinie angeordnet sind, wobei der Mittelpunkt der Kreislinie auf der Mittelachse des Läuterbottichs liegt. Durch die kreissymmetrische Anordnung der Zuführöffnungen ergibt sich eine gleichmäßige Fließwegverteilung bei der Strömung der Maische entlang des Läuterbottichbodens. Die Zuführöffnungen sind dazu vorzugsweise mit einer gleichmäßigen Winkelteilung auf der Kreislinie zu verteilen. Die Anzahl der Zuführöffnungen ist insbesondere auf die Größe des Läuterbottichs abzustimmen.

Grundsätzlich kann das Puffergefäß an einer beliebigen Stelle der Sudhausanlage angeordnet werden. Um die Teilstromrohre im wesentlichen baugleich fertigen zu können, sollte das Puffergefäß vorzugsweise zentrisch zur Mittelachse des Läuterbottichs angeordnet sein, da der Abstand von einem Punkt der Mittelachse des Läuterbottichs zu symmetrisch im Läuterbottichboden angeordneten Zuführöffnungen im wesentlichen immer gleich ist.

Nach einer bevorzugten Ausführungsform ist das Puffergefäß im wesentlichen kreissymmetrisch ausgebildet. Durch die kreissymmetrische Form des Puffergefäßes ist gewährleistet, daß die Einströmöffnungen der verschiedenen Teilstromrohre, das heißt der Übergang vom Puffergefäß zu den Teilstromrohren, jeweils den im wesentlichen gleichen Abstand zu den einzelnen Zuführöffnungen des Läuterbottichs haben. Wird ein kreissymmetrisches Puffergefäß zentrisch zur Mittelachse des Läuterbottichs in der Brauereianlage angeordnet, so ist gewährleistet, daß im wesentlichen baugleiche Teilstromrohre zur Verbindung des Puffergefäßes mit den einzelnen Zuführöffnungen verwendet werden können und damit alle Teilstromrohre den gleichen Leitungswiderstand aufweisen.

Um möglichst geringe Leitungswiderstände zu ermöglichen, sollten die Teilstromrohre möglichst kurz sein. Mit anderen Worten bedeutet dies, daß das Puffergefäß mit einem möglichst geringen Abstand zentrisch zum Läuterbottichboden angeordnet werden sollte, daß heißt unterhalb des Läuterbottichs. Da in vielen Brauereianlagen entlang der Mittelachse des Läuterbottichs direkt unterhalb des Läuterbottichbodens die Hauptwelle des Läuterbottichantriebs verläuft, sollte das Puffergefäß in diesen Fällen vorzugsweise einen rohrartigen Durchgang aufweisen, dessen Durchmesser zumindest geringfügig größer ist als der Durchmesser der Hauptwelle des Läuterbottichantriebs. Im Ergebnis kann in diesem hülsenförmigen Durchgang des Puffergefäßes die Hauptwelle des Läuterbottichantriebs verlaufen, so daß die Anordnung des Puffergefäßes im Bereich direkt unterhalb des Läuterbottichbodens möglich ist. Falls die Hauptwelle anders verläuft, beispielsweise von oben in den Läuterbottich geführt wird, kann der Durchgang entfallen.

Selbstverständlich kann das Puffergefäß als separates Bauteil ausgeführt sein und in der Form eines entsprechend ausgebildeten Behälters an einer grundsätzlich beliebigen Position der Sudhausanlage angeordnet sein. Da aber auch das Läutersammelgefäß der meisten bekannten Brauereianlagen zentrisch zur Mittelachse des Läuterbottichs unterhalb des Läuterbottichbodens angeordnet ist und einen Durchgang aufweisen, der von der Hauptwelle des Läuterbottichantriebs durchgreifbar ist, ist es zur Reduzierung der Fertigungskosten vorteilhaft, das erfindungsgemäße Puffergefäß und das Läutersammelgefäß einer Brauereianlage in einem Zweikammergefäß zusammenzufassen, wobei die Kammer zur Aufnahme der Maische und die Kammer zur Aufnahme der Würze durch zumindest eine Trennwand druckdicht voneinander getrennt sind, so daß Maische und Würze nicht vermischt werden. Das Zweikammergefäß hat dann vorzugsweise einen gemeinsamen Durchgang durch beide Kammern, in der die Hauptwelle verläuft.

Nach einer bevorzugten Ausführungsform des Zweikammergefäßes ist die Kammer zur Aufnahme der Maische unterhalb der Kammer zur Aufnahme der Würze in dem Zweikammergefäß angeordnet. Falls erforderlich kann die Anordnung aber auch umgekehrt erfolgen.

Ein besonders einfacher Aufbau des Zweikammergefäßes ergibt sich, wenn die Kammer zur Aufnahme der Maische und die Kammer zur Aufnahme der Würze im wesentlichen den gleichen Innen- und/oder Außendurchmesser aufweisen. Durch diese Maßnahme können die Außen- bzw. Innenzylinderflächen des Zweikammergefäßes entweder einteilig, beispielsweise als Rohrabschnitt, oder durch Verwendung von Gleichteilen für beide Kammern ausgebildet werden.

Weisen beide Kammern des Zweikammergefäßes den gleichen Innen- und Außendurchmesser auf, so können die beiden Kammern in besonders einfacher Weise durch eine kreisringförmige Trennwand voneinander getrennt werden. Die kreisringförmige Trennwand wird an ihrem Innen- bzw. Außendurchmesser mit den Innen- bzw. Außenzylinderflächen der beiden Kammern druckdicht verbunden. Die Innenzylinderfläche der beiden Kammern kann dabei besonders einfach in der Art eines einstückigen Rohrabschnitts ausgebildet sein.

Um ein druckloses Ablaufen der Würze aus der Kammer zur Aufnahme der Würze des Zweikammergefäßes zu ermöglichen, sollte die Bauteilebene der Trennwand zwischen den beiden Kammern relativ zur Horizontalebene im Winkel von 1 bis 30° verlaufen. Die oberhalb dieser schräg angeordneten Trennwand befindliche Würze läuft infolge der Schwerkraft drucklos aus dem Zweikammergefäß ab.

Nachfolgend wird die Vorrichtung anhand lediglich bevorzugte Ausführungsformen darstellender Zeichnungen näher erläutert. Es zeigt:
- **Fig. 1**: eine schematisch dargestellte Läuterbottichanlage mit einer erfindungsgemäßen Vorrichtung zur Maischezuführung in seitlicher teilweise geschnittener Ansicht;
- **Fig. 2**: einen Ausschnitt aus der Läuterbottichanlage nach **Fig. 1** mit einem Zweikammergefäß;
- **Fig. 3**: das Zweikammergefäß nach **Fig. 2** mit daran angeschlossenen Rohrleitungen im Querschnitt;
- **Fig. 4**: die Läuterbottichanlage nach **Fig. 1** in Ansicht von oben;
- **Fig. 5**: ein Zweikammergefäß im Querschnitt;

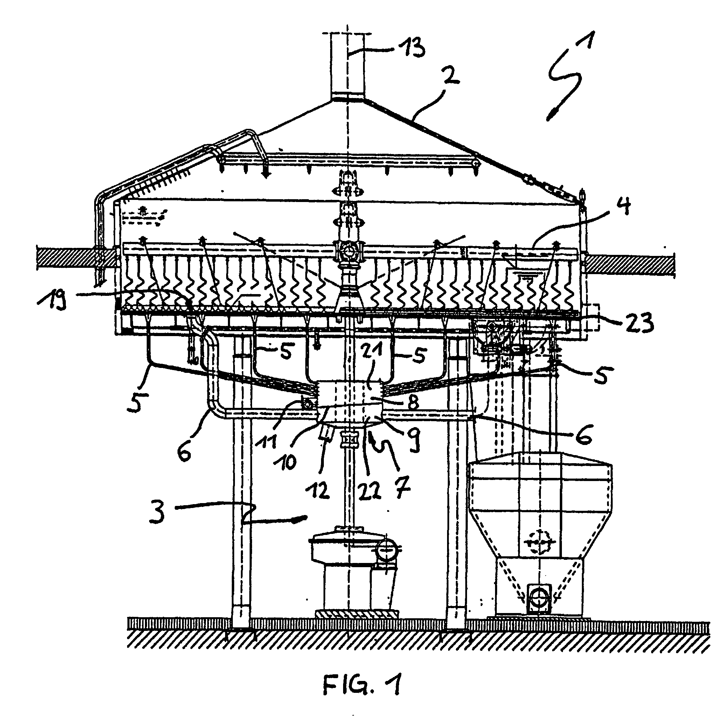

**Fig. 1** zeigt eine schematisch dargestellte Läuterbottichanlage 1 mit einem Läuterbottich 2, einem Läuterbottichantrieb 3 und einer Aüfhackvorrichtung 4. Die Würze kann aus dem Läuterbottich 2 über am Boden des Läuterbottichs 2 angeschlossene Läutersammelrohre 5 abgezogen werden. Ebenfalls an der Unterseite des Läuterbottichs 2 sind vier Teilstromrohre 6 angeschlossen, über die Maische in den Läuterbottich 2 zugeführt werden kann. Die Läutersammelrohre 5 und die Teilstromrohre 6 sind alle an ein Zweikammergefäß 7, mit einer als Läutersammelgefäß 21 ausgebildeten oberen Kammer 8 zur Aufnahme der abgeläuterten Würze und einer als Puffergefäß 22 ausgebildeten unteren Kammer 9 zur Aufnahme der Maische angeschlossen. Die beiden im Querschnitt kreisringförmigen Kammern 8 und 9 des Zweikammergefäßes 7 sind durch eine kreisringförmige Trennwand 10 druckdicht voneinander getrennt, so daß keine Flüssigkeit zwischen den beiden Kammern 8 und 9 ausgetauscht werden kann.

Die über die Läuterrohre 5 abgezogene Würze kann aus der oberen Kammer 8 über ein nicht dargestelltes Hauptläuterrohr, das an einen Flansch 11 angeschlossen ist, aus dem Zweikammergefäß 7abgezogen werden. Beim Abmaischen wird die Maische aus einem nicht dargestellten Maischebehälter durch eine nicht dargestellte Maischepumpe in das gebrochen dargestellte Hauptrohr 12 gepumpt, so daß die Maische nach der Befüllung der unteren Kammer 9 des Zweikammergefäßes 7 über die Teilstromrohre 6 in den Läuterbottich 2 einströmt.

Um im wesentlichen baugleiche Teilstromrohre 6 verwenden zu können, ist das Zweikammergefäß 7 zentrisch zur Mittelachse 13 des Läuterbottichs 2 angeordnet.

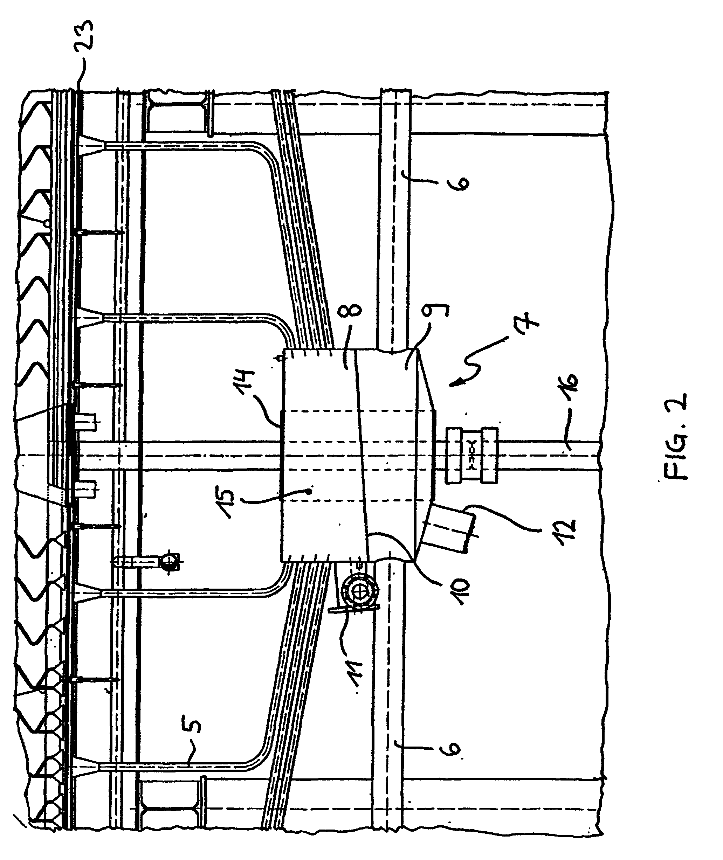

**Fig. 2** zeigt das Zweikammergefäß 7 im Detail. Die Innenzylinderflächen der beiden Kammern 8 und 9 wird von einem durchgehenden Rohrabschnitt 14 gebildet. Dadurch ergibt sich in der Mitte des Zweikammergefäßes 7 ein rohrartiger Durchgang 15, in dessen Mitte die Hauptwelle 16 des Läuterbottichantriebs 3 verläuft.

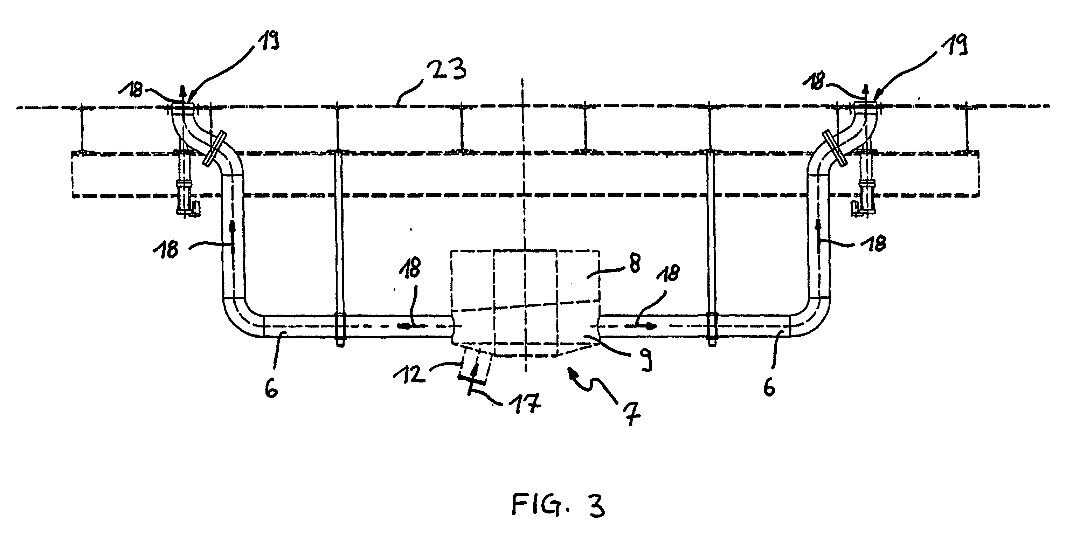

**Fig. 3** zeigt den Strömungsverlauf der Maische während des Abmaischens. Durch die nicht dargestellte Maischepumpe wird die Maische entlang des Strömungspfeils 17 aus dem Hauptrohr 12 in die untere Kammer 9 des Zweikammergefäßes 7 eingepumpt. Nach der Befüllung der Kammer 9 strömt die Maische entlang der Strömungspfeile 18 durch die Teilstromrohre 6 und gelangt an deren zweiten Ende durch die Zuführöffnungen 19 in das Innere des Läuterbottichs 2. Da die Teilstromrohre 6 alle im wesentlichen baugleich sind, d. h. gleichen Rohrdurchmesser, gleiche Rohrlänge und gleiche Rohrgeometrie aufweisen, stimmt der Leitungswiderstand aller Teilströmrohre 6 im wesentlichen überein.

Nach dem Abklingen von Einschwingvorgängen zu Beginn des Abmaischens bildet sich im Inneren der Kammer 9 ein im wesentlichen konstanter Gesamtdruck aus, weshalb die Maische mit gleichem Anfangsdruck in alle Teilstromrohre 6 einströmt. Da auch der Leitungswiderstand aller Teilstromrohre 6 übereinstimmt, stimmen die Strömungsverhältnisse der einströmenden Maische an allen Zuführöffnungen 19 im wesentlichen überein und es bildet sich eine gleichmäßige Filterschicht am Boden 23 des Läuterbottichs 2 aus.

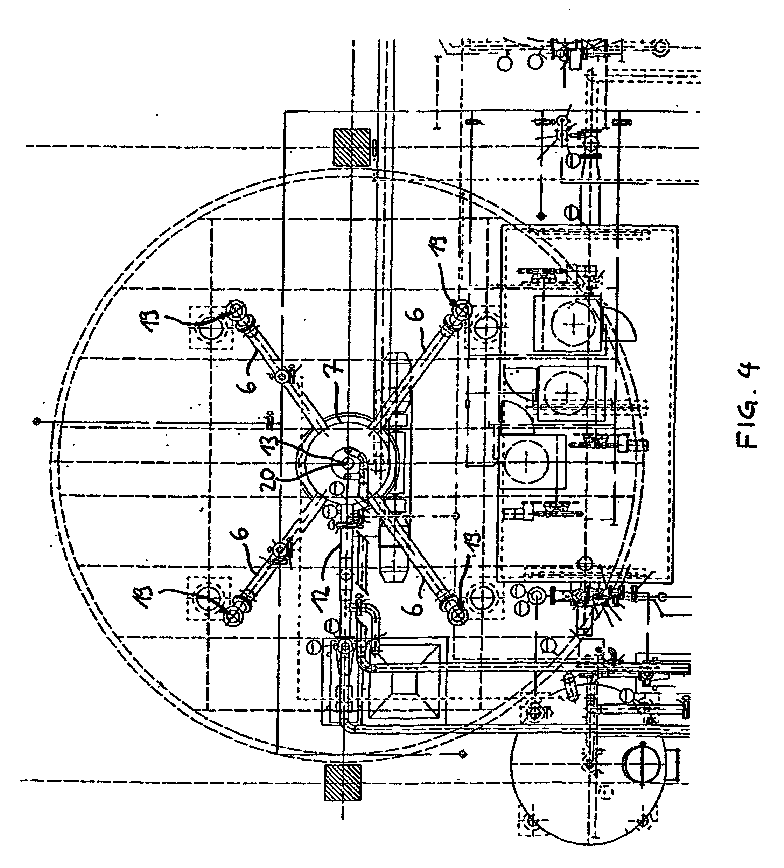

**Fig. 4** zeigt die Läuterbottichanlage 1 aus **Fig. 1** in Ansicht von oben. Einige Teile der Anlage, sind zur besseren Erkennbarkeit des Anlagenaufbaus lediglich mit Strichlinien angedeutet. Man erkennt das Zweikammergefäß 7, die vier Teilstromrohre 6 und das Hauptrohr 12. Die oberen Enden der Teilstromrohre 6 sind an die vier Zuführöffnungen 19 im Boden 23 des Läuterbottichs 2 angeschlossen. Die Zuführöffnurigen 19 sind dabei auf einer gedachten Kreislinie angeordnet, deren Mittelpunkt 20 auf der Mittelachse 13 des Läuterbottichs 2 liegt.

Man erkennt in Ansicht von oben den kreissymmetrischen Querschnitt des Zweikammergefäßes 7, das zentrisch zur Mittelachse 13 des Läuterbottichs 2 angeordnet ist.

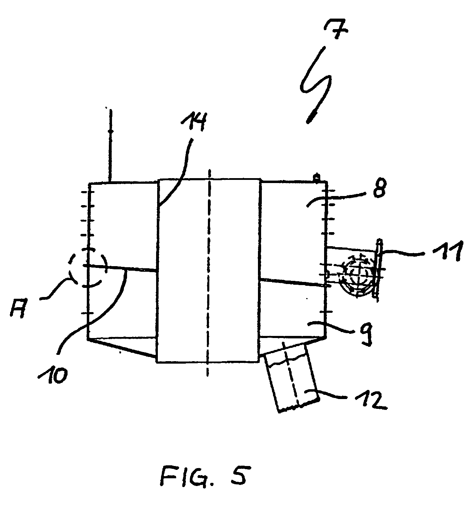

**Fig. 5** zeigt das Zweikammergefäß 7 mit den beiden Kammern 8 und 9, der Trennwand 10, dem Rohrflansch 11 und dem gebrochen dargestellten Hauptrohr 12 im Querschnitt. Die Innenzylinderflächen der beiden Kammern 8 und 9 werden beide von dem durchgehenden Rohrabschnitt 14 gebildet, in der nach dem Einbau die Hauptwelle 3 des Läuterbottichantriebs 3 verläuft. Die Außenzylinderflächen der beiden Kammern 8 und 9, an denen die Läutersammelrohre bzw. die Teilstromrohre angeflanscht werden, sind jeweils separat gefertigt und werden von oben bzw. von unten an der kreisscheibenförmigen Trennwand 10 festgeschweißt. Um ein druckloses Ablaufen der Würze aus der oberen Kammer 8 durch den Flansch 11 zu ermöglichen, verläuft die Bauteilebene der Trennwand 10 relativ zur Horizontalebene unter einem spitzen Winkel.

## Patentansprüche

1. Vorrichtung zur Maischezuführung in einen Läuterbottich mit einer Maischepumpe, einem Hauptrohr, das an die Maischepumpe angeschlossen ist und zumindest zwei Teilstromrohren, die das Hauptrohr mit jeweils einer Zuführöffnung im Läuterbottich verbinden, wobei beim Betrieb der Maischepumpe Maische aus einem Maischebehälter über das Hauptrohr und die Teilstromrohre in den Läuterbottich zuführbar ist,
**dadurch gekennzeichnet,**
**daß** zwischen dem Hauptrohr (12) und den Teilstromrohren (6) ein Puffergefäß (22) angeordnet ist.

2. Vorrichtung nach Anspruch 1,
**dadurch gekennzeichnet,**
**daß** alle Teilstromrohre (6) im wesentlichen den gleichen Leitungswiderstand aufweisen.

3. Vorrichtung nach Anspruch 1 oder 2,
**dadurch gekennzeichnet,**
**daß** alle Teilstromrohre (6) im wesentlichen den gleichen Rohrdurchmesser und die gleiche Rohrlänge aufweisen, insbesondere im wesentlichen baugleich sind.

4. Vorrichtung nach einem der Ansprüche 1 bis 3,
**dadurch gekennzeichnet,**
**daß** die Zuführöffnungen (19) im Läuterbottich (2) an dessen Unterseite angeordnet sind.

5. Vorrichtung nach einem der Ansprüche 1 bis 4,
**dadurch gekennzeichnet,**
**daß** der Läuterbottich (2) zumindest zwei Zuführöffnungen (19) für die Maischezufuhr aufweist, die alle auf einer gedachten Kreislinie angeordnet sind, wobei der Mittelpunkt (20) der Kreislinie auf der Mittelachse (13) des Läuterbottichs (2) liegt.

6. Vorrichtung nach einem der Ansprüche 1 bis 5,
**dadurch gekennzeichnet,**
**daß** das Puffergefäß (22) zentrisch zur Mittelachse (13) des Läuterbottichs (2) angeordnet ist.

7. Vorrichtung nach einem der Ansprüche 1 bis 6,
**dadurch gekennzeichnet,**
**daß** der Querschnitt des Puffergefäßes (22) im wesentlichen kreissymmetrisch ausgebildet ist.

8. Vorrichtung nach einem der Ansprüche 1 bis 7,
**dadurch gekennzeichnet,**
**daß** das Puffergefäß (22) einen rohrartigen Durchgang (15) aufweist, dessen Durchmesser zumindest geringfügig größer ist als der Durchmesser der Hauptwelle (16) des Läuterbottichantriebs (3).

9. Vorrichtung nach einem der Ansprüche 1 bis 8,
**dadurch gekennzeichnet,**
**daß** das Puffergefäß (22) und eine Läutersammelgefäß (21) in einem Zweikammergefäß (7) zusammengefaßt sind, wobei die Kammer (9) zur Aufnahme der Maische und die Kammer (8) zur Aufnahme der Würze durch zumindest eine Trennwand (10) drückdicht voneinander getrennt sind.

10. Vorrichtung nach einem der Ansprüche 1 bis 9,
**dadurch gekennzeichnet,**
**daß** die Kammer (9) zur Aufnahme der Maische unterhalb der Kammer (8) zur Aufnahme der Würze in dem Zweikammergefäß (7) angeordnet ist.

11. Vorrichtung nach einem der Ansprüche 1 bis 10,
**dadurch gekennzeichnet,**
**daß** die Kammer (9) zur Aufnahme der Maische und die Kammer (8) zur Aufnahme der Würze im wesentlichen den gleichen Innenund/oder Außendurchmesser aufweisen.

12. Vorrichtung nach einem der Ansprüche 1 bis 11,
**dadurch gekennzeichnet,**
**daß** die Kammer (9) zur Aufnahme der Maische und die Kammer (8) zur Aufnahme der Würze durch eine kreisringförmige Trennwand (10) voneinander getrennt sind.

13. Vorrichtung nach einem der Ansprüche 1 bis 12,
**dadurch gekennzeichnet,**
**daß** die Bauteilebene der Trennwand (10) relativ zur Horizontalebene im Winkel von 1 bis 30 Grad verläuft.

## Claims

1. Device for the feeding of mash into a lauter tun with a mash pump, a main pipe which is connected to the mash pump and at least two partial stream pipes which connect the main pipe to a feed opening in the lauter tun in each case, it being possible to feed mash from a mash container into the lauter tun via the main pipe and the partial stream pipes when the mash pump is in operation, **characterized in that** a buffer vessel (22) is arranged between the main pipe (12) and the partial stream pipes (6).

2. Device according to Claim 1, **characterized in that** all partial stream pipes (6) have substantially the same line resistance.

3. Device according to Claim 1 or 2, **characterized in that** all partial stream pipes (6) have substantially the same pipe diameter and the same pipe length, particularly are substantially of identical construction.

4. Device according to one of Claims 1 to 3, **characterized in that** the feed openings (19) in the lauter tun (2) are arranged on the underside thereof.

5. Device according to one of Claims 1 to 4, **characterized in that** the lauter tun (2) has at least two feed openings (19) for the mash feed, all of which are arranged on an imaginary circular line, the centre point (20) of the circular line lying on the centre axis (13) of the lauter tun (2).

6. Device according to one of Claims 1 to 5, **characterized in that** the buffer vessel (22) is arranged centrically to the centre axis (13) of the lauter tun (2).

7. Device according to one of Claims 1 to 6, **characterized in that** the cross-section of the buffer vessel (22) is substantially circular-symmetrical in form.

8. Device according to one of Claims 1 to 7, **characterized in that** the buffer vessel (22) has a tubular passage (15), the diameter of which is at least slightly larger than the diameter of the main shaft (16) of the lauter tun drive (3).

9. Device according to one of Claims 1 to 8, **characterized in that** the buffer vessel (22) and a lauter collecting vessel (21) are combined in a two-chamber vessel (7), the chamber (9) for receiving the mash and the chamber (8) for receiving the wort being separated from each other in pressure-tight manner by at least one partition (10).

10. Device according to one of Claims 1 to 9, **characterized in that** the chamber (9) for receiving the mash is arranged underneath the chamber (8) for receiving the wort in the two-chamber vessel (7).

11. Device according to one of Claims 1 to 10, **characterized in that** the chamber (9) for receiving the mash and the chamber (8) for receiving the wort have substantially the same internal and/or external diameter.

12. Device according to one of Claims 1 to 11, **characterized in that** the chamber (9) for receiving the mash and the chamber (8) for receiving the wort are separated from one another by an annular partition (10).

13. Device according to one of Claims 1 to 12, **characterized in that** the component plane of the partition (10) runs at an angle of 1 to 30 degrees relative to the horizontal plane.

## Revendications

1. Dispositif pour l'amenée du moût dans une cuve de filtrage avec une pompe à moût, un tuyau principal qui est raccordé à la pompe à moût et au moins deux tuyaux de courant partiel qui relient le tuyau principal chacun à une ouverture d'amenée dans la cuve de filtrage, lors du fonctionnement de la pompe à moût, le mout pouvant être alimenté depuis un conteneur à moût par le tuyau principal et les tuyaux de courant partiel dans la cuve de filtrage, **caractérisé en ce qu'**entre le tuyau principal (12) et les tuyaux de courant partiels (6), il est disposé un récipient tampon (22).

2. Dispositif selon la revendication 1, **caractérisé en ce que** tous les tuyaux de courant partiel (6) présentent sensiblement la même résistance de conduit.

3. Dispositif selon la revendication 1 ou 2, **caractérisé en ce que** tous les tuyaux de courant partiel (6) présentent essentiellement le même diamètre de tuyau et la même longueur de tuyau, en particulier sont de construction identique.

4. Dispositif selon l'une des revendications 1 à 3, **caractérisé en ce que** les ouvertures d'alimentation (19) sont disposées dans la cuve de filtrage (2) sur sa face inférieure.

5. Dispositif selon l'une des revendications 1 à 4, **caractérisé en ce que** la cuve de filtrage (2) présente au moins deux ouvertures d'alimentation (19) pour l'amenée de moût qui sont toutes disposées sur un cercle imaginaire, le point central (20) du cercle se trouvant sur l'axe médian (13) de la cuve de filtrage (2).

6. Dispositif selon l'une des revendications 1 à 5, **caractérisé en ce que** le récipient tampon (22) est disposé au centre par rapport à l'axe médian (13) de la cuve de filtrage (2).

7. Dispositif selon l'une des revendications 1 à 6, **caractérisé en ce que** la section transversale du récipient tampon (22) est essentiellement en forme de cercle symétrique.

8. Dispositif selon l'une des revendications 1 à 7,
**caractérisé en ce que** le récipient tampon (22) présente un passage tubulaire (15) dont le diamètre est au moins légèrement supérieur au diamètre de l'arbre central (16) de l'entraînement (3) de la cuve de filtrage.

9. Dispositif selon l'une des revendications 1 à 8, **caractérisé en ce que** le récipient tampon (22) et un récipient collecteur de filtrage (21) sont rassemblés dans un récipient à deux chambres (7), la chambre (9) recevant le moût et la chambre (8) recevant le condiment étant séparées par au moins une cloison (10) de manière étanche à la pression.

10. Dispositif selon l'une des revendications 1 à 8, **caractérisé en ce que** la chambre (9) recevant le moût est disposée en aval de la chambre (8) recevant le condiment dans le récipient à deux chambres (7).

11. Dispositif selon l'une des revendications 1 à 10, **caractérisé en ce que** la chambre (9) recevant le moût et la chambre (8) recevant le condiment présentent sensiblement le même diamètre intérieur et/ou extérieur.

12. Dispositif selon l'une des revendications 1 à 11, **caractérisé en ce que** la chambre (9) recevant le moût et la chambre (8) recevant le condiment sont séparées l'une de l'autre par une cloison annulaire (10).

13. Dispositif selon l'une des revendications 1 à 12, **caractérisé en ce que** le plan des composants de la cloison séparatrice (10) s'étend par rapport au plan horizontal suivant un angle compris entre 1 et 30 degrés.
